Europäisches Patentamt

European Patent Office

Office européen des brevets

(19)

(11) Veröffentlichungsnummer: **0 003 332**

**A1**

(12) # EUROPÄISCHE PATENTANMELDUNG

(21) Anmeldenummer: **79100157.1**

(22) Anmeldetag: **19.01.79**

(51) Int. Cl.²: **F 24 H 7/02**
**F 24 J 3/00**

(30) Priorität: **20.01.78 DE 2802343**

(43) Veröffentlichungstag der Anmeldung:
**08.08.79 Patentblatt 79/16**

(84) Benannte Vertragsstaaten:
**BE CH DE FR GB IT NL SE**

(71) Anmelder: **Friderichs, Peter, Dr.**
**Sandstrasse 21**
**D-6530 Bingen 12(DE)**

(84) Benannte Vertragsstaaten:
**BE CH DE FR GB IT NL SE**

(71) Anmelder: **Friderichs-Weinle, Wiltraut**
**Sandstrasse 21**
**D-6530 Bingen(DE)**

(84) Benannte Vertragsstaaten:
**BE CH DE FR GB IT NL SE**

(72) Erfinder: **Friderichs, Peter, Dr.**
**Sandstrasse 21**
**D-6530 Bingen 12(DE)**

(72) Erfinder: **Friderichs-Weinle, Wiltraut**
**Sandstrasse 21**
**D-6530 Bingen(DE)**

(74) Vertreter: **Kohler, Anton, Dr. et al,**
**Dr. A. Kohler + M. Schroeder**
**Patentanwälte Franz-Joseph-Strasse 48**
**D-8000 München 40(DE)**

(54) **Latentwärmespeicher-Behälter.**

(57) Bei einem Latentwärmespeicher-Behälter zur Aufnahme chemischer Latentwärmespeichermittel ist mindestens eine Wandseite eines Chemikalienbehälters so ausgebildet, daß sie von einem Wärmeträger durchströmt werden kann, druckfest ist und den Chemikalienbehälter auf mindestens einer Fläche abdichtet und/oder stützt. In spezieller Ausbildung besteht der Latentwärmespeicher-Behälter aus einem flachen Druckbehälterteil (1) zur Aufnahme des Wärmeträgers und einem darauf aufgesetzten Gehäuse (2), das durch gasdichte Verbindung mit dem Druckbehälter einen gasdichten Behälter (3) zur Aufnahme von Chemikalien bildet (Fig. 2). Der Latentwärmespeicher-Behälter kann in modularer Bauweise zu beliebig großen Latentwärmespeichern angeordnet werden und ermöglicht bei kompakter Bauweise eine äußerst wirtschaftliche Energienutzung.

Fig.2

EP 0 003 332 A1

## Latentwärmespeicher-Behälter

Beschreibung

Die Erfindung betrifft einen Latentwärmespeicher-Behälter, der sich insbesondere zur Füllung mit chemischen Substanzen eignet, die die Wärme latent, das heißt, durch Phasenumwandlung (fest-flüssig), speichern können.

Latentwärmespeicher sind zur Speicherung von Wärme in Verbindung mit der Solartechnik, mittels einer Wärmepumpe oder direkt umgewandelter elektrischer Energie im Niedertarifbereich (Nacht) bzw. sonstiger Abfallwärme, bestens geeignet. Sie können die latent, das heißt, durch Phasenumwandlung gespeicherte Energie, beliebig lange speichern und bei Bedarf entladen werden. Die bei kleiner Temperaturdifferenz gespeicherte Energie ist im Vergleich mit der Speicherung in reiner Flüssigkeit (Wasser) sehr groß. Hieraus resultiert ein kleines Bauvolumen und wirtschaftliche Energienutzung.

- 2 -

0003332

Bisher wurden chemische Latentwärmespeicher so ausgeführt, daß die chemische Substanz in Behältern unterschiedlicher Form untergebracht war, die ihrerseits in einem Großbehälter gestapelt waren, der von einem Wärmeträger - in der Regel Wasser - durchströmt wurde. In VDI-Berichte Nr. 288, 1977, Seiten 97 bis 104 wird auf einen Latentwärmespeicher hingewiesen, der aus einem mit großflächigen Rippen versehenen Wärmerohr (Wärmetauscher) besteht, das in einem mit Speichermedium gefüllten Raum angeordnet ist. Diese Konstruktionen führten zu sehr großräumigen und schlecht ausgenutzten Anordnungen und erwiesen sich als sehr aufwendig, da der vom Wärmeträger des Heizsystems durchströmte Behälter entweder druckfest sein mußte, oder bei druckloser Konstruktion war zusätzlich ein Wärmetauscher erforderlich. Die berippten Wärmerohre bedingen eine äußerst komplizierte Bauweise unter hohem Kostenaufwand.

Der Erfindung liegt die Aufgabe zugrunde, einen Latentwärmespeicher-Behälter zu schaffen, der bei geringem Bauvolumen eine äußerst wirtschaftliche Energienutzung ermöglicht, durch kompakte Bauweise viel Latentspeichermasse auf kleinsten Raum bringt und eine Anordnung in Form der Modultechnik ermöglicht.

Gegenstand der Erfindung ist ein Latentwärmespeicher-Behälter zur Aufnahme chemischer Latentwärmespeichermittel, der dadurch gekennzeichnet ist, daß mindestens eine Wandseite eines Chemikalienbehälters so ausgebildet ist, daß sie von einem Wärmeträger durchflutet werden kann, zugleich druckfest ist und den Chemikalienbehälter auf mindestens einer Fläche abdichtet und/oder stützt. Zweckmäßig besteht der Latentwärmespeicher-Behälter aus einem oder mehreren gasdicht verschlossenen Chemikalienbehälterteil(en) 3 und flachem(n) von Flüssigkeit durch-

- 3 -                           0003332

strömbaren Druckbehälterteil(en) 1.

Chemikalienbehälterteil und Druckbehälterteil können
zu verschiedenen Strukturen oder Modulen miteinander
verbunden sein. Beispielsweise kann der Chemikalienbehälterteil einseitig oder beidseitig des Druckbehälterteils angeordnet sein, oder er wird von zwei
Druckbehälterteilen eingeschlossen.

Auf einem flachen profilierten oder glatten Druckbehälter 1 (z.B. Flachheizkörper) kann ein glattes oder
profiliertes Gehäuse 2 aufgebracht sein, das gasdicht
verschlossen, bzw. mit dem Druckbehälterteil 1 so verbunden ist, daß sich ein gasdichter Behälterteil 3 zur
Aufnahme von chemischen Latentwärmespeichermitteln ergibt. Beispielsweise kann auf einen flachen Druckbehälterteil ein teilweise offenes Gehäuse mit der offenen
Seite gegen den Druckbehälterteil aufgesetzt und mit dem
Druckbehälterteil, z.B. durch Verschweißen oder Verkleben, gasdicht verschlossen werden, sodaß sich aus Gehäuse und dicht anliegender Wand des Druckbehälterteils
ein gasdichter Behälter bildet, der über einen nicht gezeigten Verschluß mit Latentwärmespeichermittel gefüllt
werden kann. Andererseits kann auch ein allseits geschlossener, gegebenenfalls mit einer verschließbaren
Einfüllöffnung für die Chemikalien versehener Chemikalienbehälter, z.B. durch Verkleben oder Verschweißen,
mit dem Druckbehälterteil fest verbunden werden, um den
Wärmeübergang vom Speichermittel zum Wärmeträger herbeizuführen. Nach einer anderen Ausführungsform kann das
Latentwärmespeichermittel in gasdichten Folienbehältern,
z.B. durch Verschweißen oder Verkleben, eingeschlossen
sein, die auf den vom Wärmeträger durchströmten Druckbehälter eng anliegend aufgelegt werden und durch kissenartiges Anschmiegen den Wärmeaustausch begünstigen. Der Druckbehälterteil besteht beispielsweise aus einem einfachen, vorzugsweise flachen, druckbeständigen Körper. Es haben sich jedoch auch zwei Druckbehälter in Übereinander- bzw. Ineinanderbauweise als zweckmäßig erwiesen, wodurch sich der Vorteil eines Zweikreissystems, beispielsweise für getrennte Heizsysteme, ergibt.

Der Latentwärmespeicher-Behälter kann aus beliebigen Materialien gefertigt sein, soweit für den Druckbehälterteil die nötige Druckfestigkeit gewährleistet ist, um dem im Heizsystem anfallenden Druck standzuhalten. Besonders bevorzugt sind Metalle und Metallegierungen mit guter Wärmeleitfähigkeit. Ferner eignen sich Kunststoffe, Glas und keramische Materialien. Auch sind Kombinationen verschiedener Materialien möglich, z.B. Metall für den Druckbehälterteil und Kunststoff für den Chemikalienbehälterteil. Für die Folienbehälter eignen sich besonders Metall- oder Kunststoffolien.

Der Latentwärmespeicher-Behälter kann in modularer Bauweise zu beliebig großen Latentwärmespeichern aufgebaut werden. Dabei werden die einzelnen Moduleinheiten in vorzugsweise stehender oder liegender Anordnung entsprechend der gewünschten Größe zusammengestellt und von einem geeigneten Wärmedämmstoff umgeben.

Die Arbeitsweise des Latentwärmespeichers ist wie folgt: Druckbehälterteil 1 wird im Betrieb von einem Wärmeträger, z.B. von warmem Wasser, oder einem anderen flüssigen Wärmeträger, durchströmt, wobei Wärme an das in Chemikalienbehälter 3 befindliche Latentwärmespeichermittel, das aus einer geeigneten chemischen Substanz zur Langzeit- und/oder Kurzzeitspeicherung von Wärme besteht, abgegeben wird.

Die Chemikalien schmelzen dabei auf. Wird bei Bedarf der Druckbehälterteil 1 von kaltem Wasser oder einem anderen flüssigen Wärmeträger durchströmt, kühlen die Chemikalien ab und kristallisieren aus, wobei die gespeicherte Wärme an den Wärmeträger (Wasser) abgegeben wird.

Der erfindungsgemäße Latentwärmespeicher-Behälter ergibt aufgrund der engen Verbindung zwischen dem den Druckbehälterteil durchströmenden Wärmeträger und dem im direkt angrenzenden Chemikalienbehälterteil enthaltenen Latentwärmespeichermittel einen hervorragenden Wärmeübergang und ermöglicht eine kompakte Modulbauweise, sodaß bei geringer Raumbeanspruchung eine große Menge Latentwärmespeichermittel unter hoher Energieausnutzung eingesetzt werden kann.

Die Erfindung wird anhand der Zeichnungen erläutert, worin

Fig. 1 einen Latentwärmespeicher-Behälter, teilweise im Schnitt,

Fig. 2 bis 4 zu verschiedenen Moduleinheiten zusammmgefügte Latentwärmespeicher-Behälter, jeweils im Schnitt und

Fig. 5 einen aus mehreren Modulen aufgebauten Latentwärmespeicher im Schnitt wiedergeben.

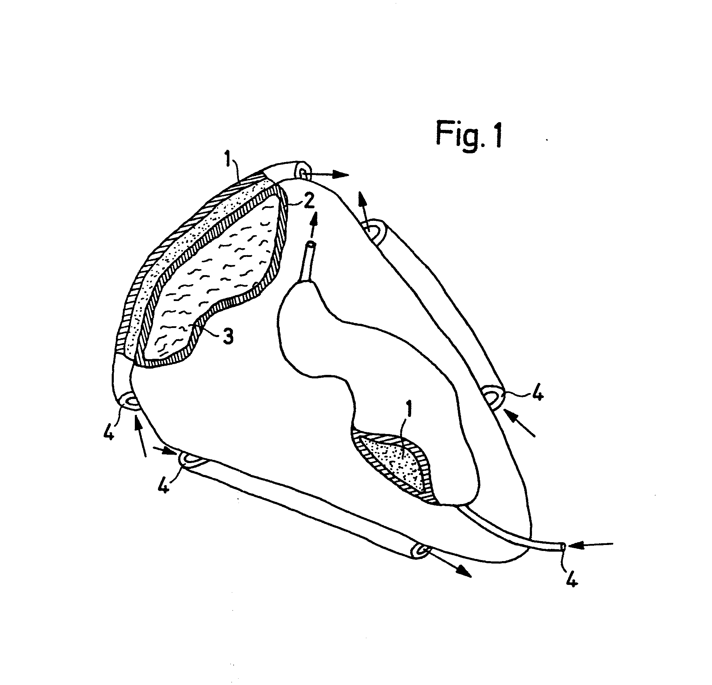

In Fig. 1 ist ein unregelmäßig geformter Latentwärmespeicher-Behälter gezeigt, der einen Chemikalienbehälter 3 zur Aufnahme geeigneter Latentwärmespeichermittel aufweist. Die Wände 2 des Chemikalienbehälters 3 sind teilweise unter Bildung eines Druckbehälterteils 1 ummantelt, durch das ein Wärmeträger hindurchströmen kann. Durch Druckwasseranschlüsse 4 kann der Wärmeträger durch den Druckbehälterteil hindurchgeleitet werden.

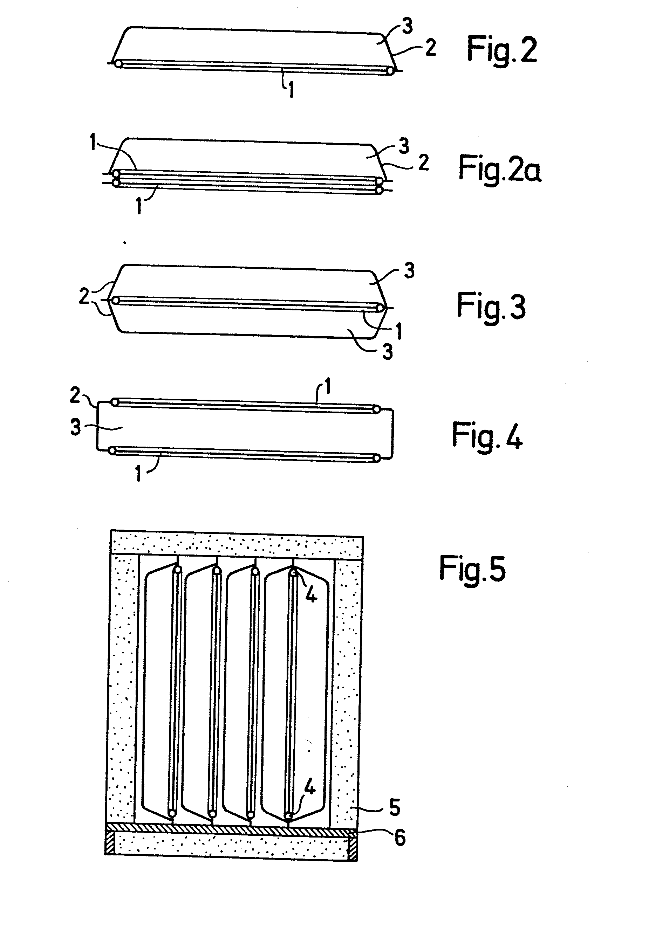

Die Fig. 2 bis 4 zeigen fertige Latentwärmespeichermodulen, von denen je nach Bedarf mehrere übereinander
oder nebeneinander gestapelt werden können.

Fig. 2 zeigt einen Latentwärmespeichermodul aus einem
flachen Druckbehälterteil 1 zur Aufnahme des Wärmeträgers, z.B. Wasser, mit darauf aufgesetztem Gehäuse 2,
das durch gasdichte Verbindung mit dem Druckbehälterteil 1
einen gasdichten Behälter 3 zur Aufnahme von Chemikalien
ergibt.

In Fig. 2a ist der Aufbau gemäß Fig. 2 dadurch abgewandelt, daß der Druckbehälterteil 1 aus zwei übereinander gebauten Wärmetauschern besteht.

In Fig. 3 sind zwei Gehäuse 2 auf entgegengesetzten
Flächen des Druckbehälters 1 gasdicht aufgebracht.

Fig. 4 zeigt den Aufbau eines Moduls aus zwei Druckbehälterteilen 1 mit dazwischenliegendem gasdicht verschlossenem Chemikalienbehälter 3.

Fig. 5 zeigt einen Latentwärmespeicher, bestehend aus
drei Modulen nach Fig. 2 und einem Modul nach Fig. 3 mit
Druckwasseranschlüssen 4 auf einer Seite, sowie allseitiger Isolation 5, auf einer Bodenplatte 6 stehend.

# DR. A. KOHLER   M. SCHROEDER
## PATENTANWÄLTE

0003332

TELEFON: 37 47 42
TELEGRAMME: CARBOPAT MÜNCHEN

8 MÜNCHEN 40
FRANZ-JOSEPH-STRASSE 48

- 7 -

## Patentansprüche

1. Latentwärmespeicher-Behälter zur Aufnahme chemischer Latentwärmespeichermittel, d a d u r c h   g e k e n n - z e i c h n e t , daß mindestens eine Wandseite eines Chemikalienbehälters so ausgebildet ist, daß sie von einem Wärmeträger durchflutet werden kann, zugleich druckfest ist und den Chemikalienbehälter auf mindestens einer Fläche abdichtet und/oder stützt.

2. Latentwärmespeicher-Behälter nach Anspruch 1, d a - d u r c h   g e k e n n z e i c h n e t , daß der Gesamtbehälter aus gasdicht verschlossenem(n) Chemikalienbehälterteil(en) (3) und flachem(n) flüssigkeitsdurchströmten Druckbehälterteil(en) (1) besteht.

3. Latentwärmespeicher-Behälter nach Anspruch 1 oder 2, d a d u r c h   g e k e n n z e i c h n e t , daß sich der Chemikalienbehälterteil (3) einseitig auf dem flachen Druckbehälterteil (1) befindet.

4. Latentwärmespeicher-Behälter nach Anspruch 1 oder 2, d a d u r c h   g e k e n n z e i c h n e t , daß Chemikalienbehälterteile (3) sich beidseitig des Druckbehälterteils (1) befinden.

5. Latentwärmespeicher-Behälter nach Anspruch 1 oder 2, d a d u r c h   g e k e n n z e i c h n e t , daß Chemikalienbehälterteil (3) sich zwischen zwei Druckbehälterteilen (1) befindet.

6. Latentwärmespeicher-Behälter nach Anspruch 1 bis 5, d a d u r c h   g e k e n n z e i c h n e t , daß er aus Metall und/oder Kunststoff gefertigt sein kann.

7. Latentwärmespeicher-Behälter nach Anspruch 1 bis 6 als Modul zum Aufbau beliebig großer Latentwärmespeicher in stehender oder liegender Anordnung, umgeben von einem geeigneten Wärmedämmstoff (5).

0003332

Fig. 1

0003332

Fig.2

Fig.2a

Fig.3

Fig.4

Fig.5

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| P | DE - A - 2 746 829 (BARRY - WEHMILLER) <br> * Fig. 4; Seite 7, Absatz 2 bis Seite 8 Absatz 1; Fig. 4; Seite 9 Absatz 2 * <br><br> -- | 1,2,4 <br> 5,7 | F 24 H 7/02 <br> F 24 J 3/00 |
| | DE - B - 2 004 045 (SULZER) <br> * Fig. 5 bis 8; Fig. 1 bis 3; Spalte 4, Zeilen 49 bis 55; Spalte 4, Zeilen 35 bis 39 und Fig. 3 * <br><br> -- | 1,2, <br> 6,7 | **RECHERCHIERTE SACHGEBIETE (Int. Cl.²)** |
| | CH - A - 557 992 (SULZER) <br> * Fig. 1; Spalte 1, Zeilen 56 bis 60 * <br><br> -- | 1,2 <br> 6 | F 24 H 7/00 <br> F 24 J 3/00 <br> F 28 D 17/00 <br> F 28 F 23/00 |
| | DE - U - 1 882 539 (LAVORAZIONE) <br> * Fig. 1, Seite 2, Absatz 2; Fig. 2 * <br><br> -- | 1,2 <br> 4 | |
| | FR - A - 1 068 103 (STONE) <br> * Fig. 2; Fig. 3 * <br><br> -- | 1,7 | **KATEGORIE DER GENANNTEN DOKUMENTE** |
| A | DE - A - 2 131 430 (ACCESSAIR) <br> * Fig. 1 und 3 * <br><br> -- <br> ./.. | 1 | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

| X | Der vorliegende Recherchenbericht wurde für alle Patentansprüche erstellt. |
|---|---|

| Rechercheort | Abschlußdatum der Recherche | Prüfer |
|---|---|---|
| Berlin | 04-04-1979 | PIEPER |

EPA form 1503.1 06.78

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>AT - B - 332 047</u> (N. LAING)<br><br>* ganzes Dokument *<br><br>-- | |
| A | <u>DE - B - 2 602 530</u> (INSTITUT FÜR KERNTECHNIK)<br><br>* ganzes Dokument *<br><br>---- | |

RECHERCHIERTE
SACHGEBIETE (int. Cl.²)